# FASCICULE DE BREVET EUROPEEN

(11) **EP 0 900 966 B1**
(45) Date de publication et mention de la délivrance du brevet: **13.11.2002**
(21) Numéro de dépôt: 98420150.9
(22) Date de dépôt: 02.09.1998
(51) Int. Cl.: F16L 37/23, F16L 37/42

(54) **Coupe-circuit de sécurité pour installation de manutention de fluide**
Sicherheits-Abschaltgerät für Flüssigkeitshandhabungs-Anlage
Safety disconnection device for fluid handling plant

(30) Priorité: 04.09.1997 FR 9711187; 04.09.1997 FR 9711188
(43) Date de publication de la demande: 10.03.1999
(73) Titulaire: STAUBLI FAVERGES, 74210 Faverges (FR)
(72) Inventeur: Lacroix, Jean Jacques, 74330 Lovagny (FR); Chambaud, Antoine, 74210 Giez (FR)
(74) Mandataire: Myon, Gérard Jean-Pierre

(56) Documents cités:
- EP-A- 0 178 224
- CH-A- 323 097
- DE-A- 1 525 664
- DE-A- 3 226 227

## Description

L'invention a trait à un coupe-circuit de sécurité pour une installation de manutention de fluide sous pression telle que, par exemple, une installation de chargement de capacités en gaz combustible et, tout particulièrement, une installation de remplissage de réservoirs de véhicules automobiles avec du méthane sous pression.

Pour remplir un réservoir de véhicule automobile en un temps relativement court, les pressions utilisées sont de l'ordre de 200 bars, voire même 250 bars. Compte tenu de la valeur élevée de ces pressions, tout risque de fuite dans l'atmosphère doit être évité à cause du caractère inflammable du gaz. D'autre part, l'éventualité d'un déplacement intempestif du réservoir en cours de remplissage, déplacement qui peut être dû à une mauvaise immobilisation de l'engin ou à un défaut d'attention de l'usager, peut toujours intervenir, avec pour conséquence la rupture de la canalisation et l'échappement incontrôlé du gaz dans l'atmosphère environnante.

Par le brevet FR-B-2 708 078, on connaît un coupe-circuit pour une installation de manutention de fluide sous pression qui permet d'éviter le risque de rupture d'une canalisation flexible de remplissage en cours de chargement en autorisant, sous l'effet d'une traction axiale dépassant un seuil déterminé, le sectionnement en un point précis de cette canalisation, ce sectionnement s'accompagnant de l'obturation automatique de la portion de canalisation amont reliée à une source de fluide sous pression.

Dans ce coupe-circuit connu, une bille est prévue dans le canal central d'un embout mâle et repose contre un joint de façon à former un clapet. Si cette structure est adaptée aux conduits de faible diamètre, elle ne peut pas être facilement transposée aux conduits de diamètre plus important, notamment supérieur à 10 mm. En effet, la pression exercée sur la bille engendre un effort proportionnel au carré du rayon de la bille, cet effort étant alors de nature à déformer plastiquement le joint, ce qui peut résulter dans une fuite au niveau du clapet.

En outre, plus le diamètre de la bille est important, plus son inertie est élevée, de sorte que le temps de réponse à la fermeture du clapet peut devenir incompatible avec l'utilisation recherchée.

Dans le coupe-circuit connu de FR-B-2 708 078, il est possible, après une ouverture du coupe-circuit due à une traction importante sur l'une des canalisations auxquelles il est raccordé, de ré-emmancher l'élément femelle dans l'élément mâle sans précaution particulière. Ainsi, dans l'exemple d'une station de remplissage de réservoirs de véhicules automobiles, un utilisateur du dispositif connu peut procéder lui-même à un nouveau branchement du coupe-circuit pour continuer à se servir. Cette pratique peut s'avérer dangereuse dans la mesure où un utilisateur n'est pas apte à apprécier la capacité d'une installation à fonctionner correctement. En outre, il peut être particulièrement utile, pour une bonne gestion d'une installation incorporant un coupe-circuit, de noter le nombre d'ouvertures forcées de ce coupe-circuit, de façon à procéder en temps utile à un échange préventif afin d'éviter tout risque de dysfonctionnement. Ceci n'est pas possible avec le dispositif connu de l'art antérieur.

C'est à ces inconvénients qu'entend plus particulièrement remédier l'invention en proposant un coupe-circuit de sécurité apte à fonctionner sous des pressions élevées et avec des conduits de diamètre relativement important sans risque de fuite au niveau du clapet de fermeture. L'invention vise également à fournir un coupe circuit dont chaque ouverture peut être détectée par le personnel compétent.

Dans cet esprit, l'invention concerne un coupe-circuit de sécurité pour installation de manutention de fluide sous pression comprenant un élément mâle comprenant un embout et un élément femelle qui sont fixés aux extrémités de deux portions de canalisation et qui sont propres à s'emmancher axialement l'un dans l'autre en se verrouillant et en provoquant l'ouverture d'un clapet interne, caractérisé en ce qu'il comprend un manchon, disposé dans l'élément femelle et mobile entre une position distante d'au moins un orifice radial de passage du fluide, position commandée par l'action de l'embout (1) sur le manchon (17) et une position d'obturation de cet orifice, et en ce qu'il comprend des billes disposées à l'intérieur d'un corps creux de l'élément femelle, ces billes étant reçues dans des logements du manchon et destinées à s'engager dans une gorge annulaire externe de l'embout pour verrouiller de façon amovible le manchon par rapport à un embout de l'élément mâle, de telle sorte qu'un déplacement de l'embout en direction du débouché de l'élément femelle implique un déplacement du manchon dans la même direction en regard de l'orifice radial de passage de fluide.

Grâce à l'invention, le manchon joue le rôle d'un clapet qui est déplacé, non pas par une force de pression, mais par l'action positive de l'embout mâle. Le coupe-circuit de l'invention fonctionne correctement quels que soient le diamètre des conduits et la pression du fluide. Les billes constituent des moyens efficaces de verrouillage axial du manchon par rapport à l'embout mâle.

Selon un aspect avantageux de l'invention, le manchon est déplacé par l'embout mâle vers une position telle que le fluide sous pression exerce sur le manchon un effort essentiellement radial et centripète. L'absence d'effort axial évite tout risque de déplacement axial du manchon sous l'effet de la pression du fluide.

Selon un autre aspect avantageux de l'invention, l'orifice radial est prévu pour mettre en communication un espace annulaire, ménagé dans le corps de l'élément femelle autour du corps creux, et un canal interne de l'embout mâle.

Selon un autre aspect avantageux de l'invention, le corps creux comprend une gorge interne de réception des billes, cette gorge permettant l'escamotage des billes hors de la gorge annulaire externe de l'embout. La gorge interne du corps creux permet donc aux billes d'être chassées radialement vers l'extérieur de façon à libérer l'embout mâle en fin de course d'extraction, ce qui correspond au caractère amovible du verrouillage du manchon sur l'embout.

Selon un autre aspect avantageux de l'invention, le coupe-circuit comprend une douille chargée élastiquement dans la direction de retrait de l'embout mâle, cette douille étant pourvue d'une collerette apte à pénétrer à l'intérieur du manchon et à maintenir les billes prisonnières de la gorge interne du corps creux. La douille contribue donc au verrouillage efficace du manchon par rapport au corps creux en maintenant les billes prisonnières de la gorge du corps creux.

Selon un autre aspect avantageux de l'invention le coupe-circuit comprend une pièce de raccordement fluidique logée à l'intérieur de l'élément femelle et comprenant au moins un canal de circulation du fluide et une extension axiale apte à pénétrer dans le corps creux de façon à déterminer la position du corps creux dans le corps de l'élément femelle. La pièce de raccordement a donc un double rôle, à la fois en ce qui concerne l'écoulement du fluide et en ce qui concerne le positionnement des éléments constitutifs du coupe-circuit. On peut en particulier prévoir que la douille est en appui élastique contre l'extension axiale de la pièce de raccordement à l'intérieur du corps creux.

Selon un autre aspect avantageux de l'invention, l'orifice radial de passage du fluide est ménagé dans un anneau servant du butée de positionnement au corps creux. L'anneau a donc également une double fonction fluidique et de positionnement de certains éléments constitutifs du coupe-circuit.

Selon un autre aspect avantageux de l'invention, le verrouillage de l'élément mâle dans l'élément femelle est opéré à l'aide d'une rangée de billes qui sont montées dans un alésage d'un corps de l'élément femelle et qui sont prévues pour s'engager radialement dans une gorge annulaire pratiquée dans la paroi extérieure d'un embout de l'élément mâle, lesdites billes étant portées par un tiroir chargé élastiquement, alors que les moyens de charge élastique dudit tiroir sont prévus pour pousser ledit tiroir vers une position dans laquelle lesdites billes font saillie vers l'intérieur dudit tiroir, ledit tiroir étant alors en appui contre une butée limitant son mouvement vers l'intérieur dudit élément femelle, de telle sorte que l'introduction dudit embout mâle dans ledit élément femelle est empêchée dans cette position.

Grâce à cet aspect de l'invention, après une ouverture du coupe-circuit par traction sur l'une ou l'autre des canalisations, un utilisateur doit prévenir une personne compétente du service maintenance afin qu'il soit procédé au ré-accouplement des éléments mâle et femelle. La personne du service maintenance peut alors procéder à des vérifications rigoureuses et consigner l'incident afin d'en garder une trace écrite.

Selon un aspect avantageux de l'invention, l'élément femelle comprend un corps bipartite formé d'un corps principal contenant un clapet et d'un corps auxiliaire à l'intérieur duquel est mobile le tiroir, ces corps principal et auxiliaire étant assemblés de façon amovible. Le caractère amovible ou démontable de la liaison entre les corps principal et auxiliaire permet une intervention sur le tiroir en vue de le déplacer vers une position dans laquelle l'introduction de l'embout mâle devient possible.

On peut prévoir que la position dans laquelle les moyens de charge élastique poussent le tiroir correspond à l'appui du tiroir contre le corps principal de l'élément femelle. Ainsi, lors d'un démontage du corps auxiliaire par rapport au corps principal, l'appui du tiroir est supprimé, de sorte que celui-ci peut être déplacé vers une position permettant l'introduction de l'embout mâle.

Selon un autre aspect avantageux de l'invention, le corps de l'élément femelle comprend une gorge annulaire interne de réception des billes lors d'un déplacement du tiroir à l'encontre des moyens de charge élastique. Cette construction permet l'éjection des billes de la gorge annulaire externe de l'embout mâle lors du mouvement d'extraction de celui-ci de l'élément femelle. Cette construction évite donc une destruction du coupe-circuit lors d'une traction importante sur les canalisations auxquelles il est relié.

Avantageusement, l'embout comprend un canal central équipé d'une patte de support d'un flotteur formant clapet anti-retour. Cet aspect de l'invention permet d'éviter, lors d'une ouverture du coupe-circuit, que ne soit déversé dans l'atmosphère le fluide compris dans une canalisation reliée à l'embout mâle.

Selon un aspect particulièrement avantageux de l'invention, le coupe-circuit comprend un outil de déplacement du tiroir, à l'encontre des moyens de rappel élastique, vers une position dans laquelle les billes sont escamotées, de telle sorte qu'elles ne font pas saillie vers l'intérieur du tiroir. Cet outil, destiné à être manipulé seulement par le personnel autorisé, permet à ce personnel de ré-introduire l'embout mâle dans l'élément femelle. Dans ce cas, on peut prévoir que cet outil est prévu pour être assemblé avec le corps auxiliaire à la place du corps principal, l'outil étant pourvu d'une butée de déplacement du tiroir. En d'autre termes, le corps auxiliaire peut être monté sur l'outil à la manière dont il est monté sur le corps principal, ce montage sur l'outil résultant dans un déplacement du tiroir grâce à sa butée de l'outil.

Selon un autre aspect avantageux de l'invention, l'outil comprend un volume creux de réception de l'embout mâle. Cet aspect de l'invention permet l'introduction de l'embout mâle à l'intérieur du corps auxiliaire alors que le corps auxiliaire est monté sur l'outil.

L'invention sera mieux comprise et d'autres avantages de celle-ci apparaîtront plus clairement à la lumière de la description qui va suivre d'un mode de réalisation d'un coupe-circuit de sécurité conforme à son principe, donnée uniquement à titre d'exemple et faite en référence aux dessins annexés dans lesquels :
- la figure 1 est une coupe axiale schématique montrant l'agencement général de deux éléments mâle et femelle d'un coupe-circuit de sécurité conforme à l'invention ;
- la figure 2 illustre les deux éléments visibles à la figure 1 au moment du retrait de l'embout mâle ;
- la figure 3 montre la mise en place de l'embout mâle dans une partie femelle en vue du ré-accouplement des éléments mâle et femelle et
- la figure 4 montre une étape ultérieure du ré-accouplement.

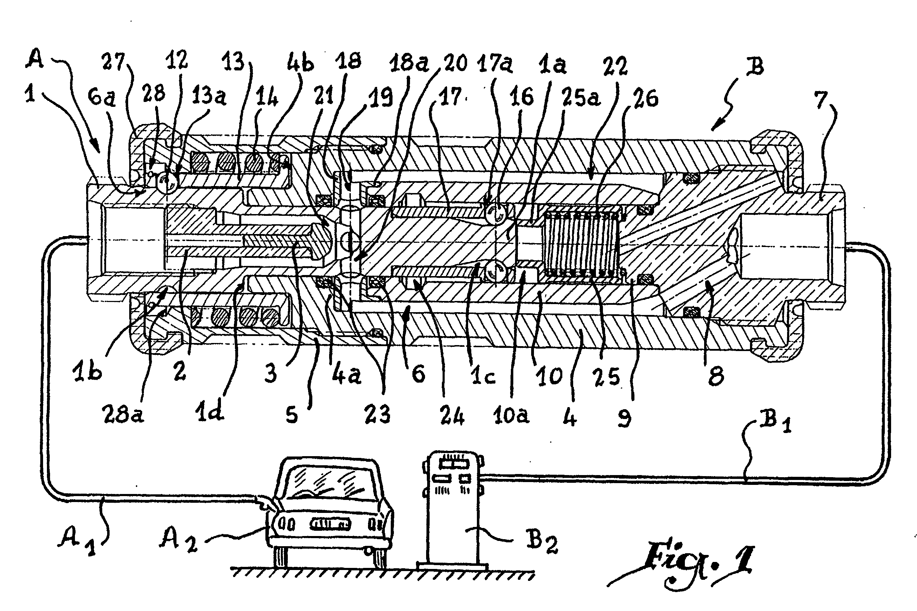

Le coupe-circuit représenté à la figure 1 est constitué à la manière d'un raccord rapide et comprend un élément mâle A et un élément femelle B prévus l'un et l'autre sous forme tubulaire. L'élément mâle A est formé d'un embout 1 dans l'alésage axial duquel est prévue une patte 2 de support d'un flotteur 3 formant clapet anti-retour. La partie arrière non représentée de l'embout 1 est reliée à une portion de canalisation aval A₁ qui porte à son extrémité un pistolet ou un organe équivalent pour le remplissage d'un réservoir de véhicule A₃.

L'élément femelle B est constitué d'un corps principal 4 et d'un corps auxiliaire 5 vissés l'un sur l'autre. Les corps 4 et 5 définissent un alésage central 6 dans lequel est logé l'embout 1 en position verrouillée. Le corps principal 4 de l'élément femelle B est relié à une portion de canalisation amont B₁ qui communique avec une source B₂ d'alimentation en gaz sous pression.

A l'intérieur de l'alésage 6 est disposée une pièce 7 de raccordement munie d'au moins un perçage 8 permettent de mettre en communication la canalisation B₁ et l'alésage central 6. La pièce 7 est pourvue d'une extension axiale 9 autour de laquelle est emmanché un corps creux 10 qui est également logé dans l'alésage 6.

Dans la position verrouillée représentée à la figure 1, l'extrémité avant 1a de l'embout 1 est logée dans un évidement central 10a du corps creux 10.

Une première rangée de billes 12 est prisonnière des logements 13a d'un tiroir 13, logé dans l'alésage 6 à l'intérieur du corps auxiliaire 5 et chargé élastiquement par un ressort 14 en direction du corps principal 4. L'embout 1 est pourvu d'une première gorge annulaire externe 1b destinée à recevoir les billes 12. Ainsi, dans la position de la figure 1, les billes 12 verrouillent efficacement l'embout 1 à l'intérieur de l'alésage central 6.

Par ailleurs, une seconde rangée de billes 16 est prévue prisonnière d'un manchon 17 alors que l'embout mâle 1 est pourvu, à proximité de son extrémité 1a, d'une seconde gorge annulaire 1c de réception des billes 16. Le manchon 17 est disposé autour de l'embout 1 à l'intérieur de l'évidement central 10a du corps creux 10.

Un anneau 18 est prévu à l'intérieur de l'alésage 6 en appui sur un épaulement 4a du corps principal 4, cet anneau 18 comprend une collerette 18a apte à entourer partiellement le corps creux 10 de façon à définir sa position à l'intérieur de l'alésage 10. En d'autres termes, l'anneau 18 coopère avec l'extension axiale 9 pour définir la position du corps creux 10 à l'intérieur de l'alésage central 6. L'anneau 18 est percé de plusieurs orifices 19 radiaux en communication avec l'alésage 6.

Dans la position de la figure 1, un perçage radial 20, traversant l'embout 1 de part en part, est disposé en regard des orifices 19. Le perçage radial 20 débouche dans un canal interne 21 de l'embout 1 qui est relié à la canalisation A₁.

La circulation du gaz entre les canalisations B₁ et A₁ a lieu à travers le ou les perçages 8, puis dans un espace annulaire 22 défini dans l'alésage 6 autour du corps creux 10. Le fluide passe alors à travers le ou les orifices 19 jusque dans le perçage 20 et le canal interne 21 par lequel il circule jusque dans la canalisation A₁.

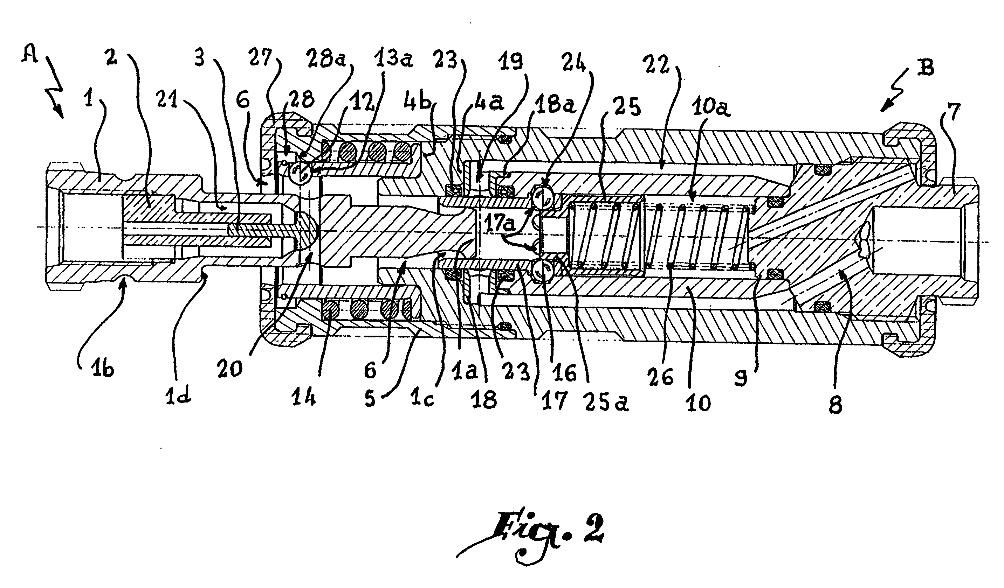

Lorsque, du fait d'un effort de traction important exercé sur l'élément A ou l'élément B, ces deux éléments sont séparés par translation de l'embout 1 en direction du débouché 6a de l'alésage central 6, l'extrémité 1a de l'embout 1 entraîne en direction du débouché 6a les billes 16 et le manchon 17 jusqu'à la position de la figure 2.

Dans cette position, le manchon 17 obture les perçages 19, de telle sorte que la circulation du fluide entre les canalisations B₁ et A₁ est interrompue sans risque de fuite. On note que quelle que soit la valeur de la pression régnant dans la canalisation B₁ et quel que soit le diamètre des conduits utilisés, la pression exercée sur le manchon 17 est essentiellement radiale et centripète, de sorte qu'elle exerce sur le manchon 17 un effort qui ne tend pas à déplacer ce manchon axialement. L'étanchéité de la fermeture du clapet est réalisée grâce à des joints 23 disposés autour des orifices 19.

Dans la position de la figure 2, les billes 16 ont été déplacées par la gorge 1c de l'embout 1 jusqu'en regard d'une gorge interne 24 du corps creux 10. Les billes 16 peuvent être escamotées en direction de la gorge 24, ce qui permet la libération de l'extrémité 1a de l'embout 1 par éjection des billes 16 à l'extérieur de la seconde gorge 1c. La gorge 1c présente un profil arrondi du côté de l'extrémité 1a de l'embout 1 pour faciliter cette éjection.

Une douille 25 est prévue à l'intérieur de l'évidement central 10a du corps creux 10 en appui élastique sur l'extension 9 grâce à un ressort 26. Au cours du mouvement d'extraction de l'embout 1, la douille 25 est en appui contre l'extrémité 1a de l'embout 1. Lorsque les billes 16 sont chassées en direction de la gorge 24, la partie avant de la douille 25, qui est en forme de collerette 25a de diamètre adapté pour pénétrer à l'intérieur du manchon 17, vient se loger dans l'extrémité du manchon 17, de façon à maintenir en position les billes 16 à l'intérieur des logements 17a prévus pour elles dans le manchon 17. Les billes 16 sont ainsi bloquées dans la gorge 24, de sorte que le manchon 17 ne peut pas être déplacé axialement. Ceci constitue un élément de sécurité supplémentaire. En effet, même si un utilisateur insère un objet allongé, tel que la pointe d'un tournevis, à l'intérieur de l'élément B et s'il appuie sur la partie exposée du manchon 17, il ne peut pas déplacer ce manchon puisque celui-ci est verrouillé en position par rapport au corps creux 10 grâce aux billes 16. La douille 25 permet donc de réaliser, grâce à la collerette 25a, un verrouillage particulièrement efficace du manchon 17 en position d'obturation des orifices 19.

Pour passer de la position de la figure 1 à la position de la figure 2, les billes 12 ont du être chassées de la première gorge 1b de l'embout 1. Pour ce faire, le tiroir 13 a été déplacé en direction du débouché 6a de l'alésage 6 contre la force du ressort 14 et en déformant un capot étanche 27 en élastomère. Le déplacement du tiroir 13 en direction du débouché 6a permet d'amener les billes 12 en regard d'une gorge interne 28 du corps auxiliaire 5. Le diamètre et la géométrie des logements 13a et des billes 12 dans le tiroir 13 sont prévus pour que celles-ci ne tombent pas à l'intérieur de l'alésage central 6, même en l'absence de l'embout 1.

Dans la position de la figure 2, on comprend qu'une nouvelle introduction de l'embout 1 en direction de la pièce 9 ne peut être réalisée, dans la mesure où un épaulement avant 1d de l'embout 1 vient buter contre les billes 12. Comme le tiroir 13 est en appui contre un épaulement 4b du corps principal 4, le tiroir 13 ne peut pas être déplacé jusqu'à une position dans lesquelles les billes pourraient être chassées radialemenc vers l'extérieur 14. Les billes font donc saillie dans l'alésage 6, de sorte que l'embout 1 est bloqué à l'extérieur du corps de l'élément B formé par les pièces 4 et 5.

Ainsi, lorsque le coupe-circuit de l'invention a été ouvert du fait d'une traction importante sur l'un ou l'autre de ses éléments constitutifs, il n'est pas possible de ré-accoupler facilement ces éléments, ce qui évite à un utilisateur d'une station service équipée d'un tel raccord de remettre en place lui-même ces éléments. L'utilisateur doit nécessairement prévenir une personne qualifiée qui procédera à la remise en place après avoir pratiqué les vérifications nécessaires.

Dans la position de la figure 2, on note que le flotteur 3 est, du fait de la pression régnant dans la canalisation A₁, repoussé en direction de l'extrémité 1a de l'embout 1, de sorte qu'il vient obturer le perçage radial 20. Ainsi, l'échappement du gaz compris dans la canalisation A₁ est limité au temps de déplacement du flotteur 3.

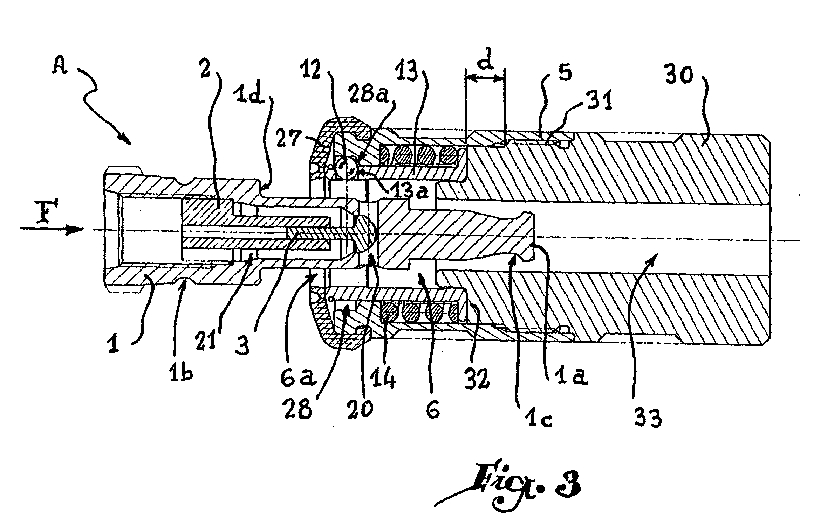

Un outil 30 est prévu pour permettre le ré-accouplement des élément mâle et femelle. Cet outil, visible à la figure 3, comprend un filet 31 lui permettant d'être assemblé avec le corps auxiliaire 5 à la place du corps principal 4. L'outil 30 comprend un épaulement annulaire 32 dont la distance d par rapport à l'avant du filet 31 est supérieure à la distance séparant l'épaulement 4b du filet correspondant sur le corps principal 4. Ainsi, lorsque le corps auxiliaire 5 est monté sur l'outil 30 à la façon représentée à la figure 3, l'épaulement 32 repousse le tiroir 13 à l'encontre de la force du ressort 14, de telle sorte que les billes 12 sont amenées en regard de la gorge interne 28 du corps 5.

Dans cette position, les billes peuvent être escamotées à l'intérieur de cette gorge, de sorte que l'embout 1 peut être introduit, dans le sens de la flèche F, dans l'ensemble formé du corps 5 et de l'outil 30. Pour ce faire, l'outil 30 comprend un canal central creux 33 de réception de l'extrémité 1a de l'embout 1.

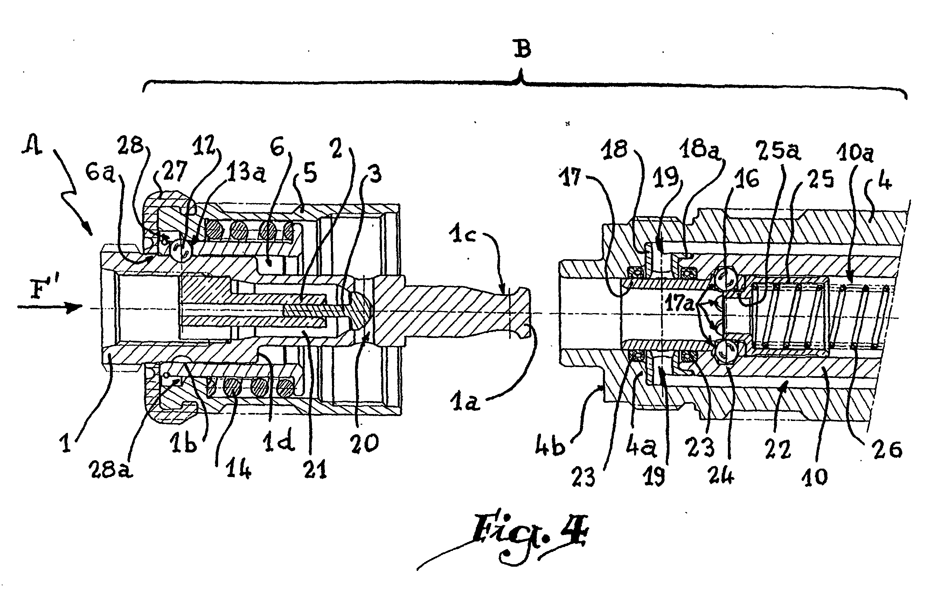

Lorsque l'embout 1 a été introduit dans l'ensemble formé des pièces 5 et 30, sa gorge 1b est disposée en regard des billes 12. Il est alors possible de dévisser l'outil 30 et le corps 5, de sorte que le ressort 14 repousse le tiroir 13 en direction de l'extrémité 1a de l'embout 1, ce qui a pour effet de déplacer les billes 12 contre une surface inclinée 28a de la gorge 28 jusqu'à ce que ces billes viennent en prise dans la gorge 1b de l'embout 1. Ainsi, après séparation de l'outil 30 et du corps auxiliaire 5, l'embout 1 est fermement maintenu en position à l'intérieur du corps auxiliaire 5. Ceci est représenté sur la gauche de la figure 4.

Lorsqu'il convient de refermer le coupe-circuit de l'invention après avoir vérifié son bon état de fonctionnement, il suffit de visser le corps 5 sur le corps 4 en amenant l'extrémité 1a de l'embout 1 jusqu'au contact de la collerette 25a de la douille 25 selon la direction de la flèche F' à la figure 4. On comprend alors que l'extrémité 1a de l'embout 1 repousse la douille 25 à l'encontre de la force du ressort 26 et que les billes 16 sont reçues dans la gorge annulaire externe 1c de l'embout 1.

La dispositif est alors à nouveau dans la position de la figure 1. Compte tenu de la différence de pression régnant dans les conduite A₁ et B₁, le flotteur 3 est repoussé en direction de la conduite A₁, de sorte que la circulation du fluide par le chemin évoqué précédemment est à nouveau possible.

L'invention a été décrite en référence à une installation de fourniture de méthane sous pression pour véhicule automobile. Il est cependant bien entendu que de nombreuses autres applications peuvent être envisagées pour le coupe-circuit de l'invention.

## Revendications

1. Coupe-circuit de sécurité pour installation de manutention de fluide sous pression comprenant un élément mâle (A) comprenant un embout (1) et un élément femelle (B) qui sont fixés aux extrémités de deux portions de canalisation (A₁, B₁) et qui sont propres à s'emmancher axialement l'un dans l'autre en se verrouillant et en provoquant l'ouverture d'un clapet interne, **caractérisé en ce qu'**il comprend un manchon (17), disposé dans ledit élément femelle et mobile entre une position distante d'au moins un orifice radial (19) de passage dudit fluide, position commandée par l'action de l'embout (1) sur le manchon (17), et une position d'obturation dudit orifice, et **en ce qu'**il comprend des billes (16) disposées à l'intérieur d'un corps creux (10) dudit élément femelle, lesdites billes étant reçues dans des logements (17a) dudit manchon et destinées à s'engager dans une gorge annulaire externe (1c) dudit embout (1) pour verrouiller de façon amovible ledit manchon par rapport à un embout (1) de l'élément mâle, de telle sorte qu'un retrait dudit embout (1) en direction du débouché (6a) dudit élément femelle (B) implique un déplacement dudit manchon (17) dans la même direction, en regard dudit orifice radial (19) de passage dudit fluide.

2. Coupe-circuit selon la revendication 1, **caractérisé en ce que** ledit orifice radial (19) est prévu pour mettre en communication un espace annulaire (22), ménagé dans le corps (4) dudit élément femelle (B) autour dudit corps creux (10), et un canal interne (21) dudit embout (1).

3. Coupe circuit selon la revendication 1, **caractérisé en ce que**, lorsque ledit manchon (17) est déplacé par ledit embout (1) lors de son retrait, ledit manchon parvient dans une position telle que le fluide sous pression exerce sur ledit manchon un effort essentiellement radial et centripète.

4. Coupe-circuit selon l'une des revendications précédentes, **caractérisé en ce que** ledit corps creux (10) comprend une gorge interne (24) de réception desdites billes (16), ladite gorge permettant l'escamotage desdites billes hors de ladite gorge annulaire externe (1c) dudit embout (1).

5. Coupe-circuit selon la revendication 4, **caractérisé en ce qu'**il comprend une douille (25) chargée élastiquement (26) dans la direction de retrait dudit embout mâle, ladite douille étant pourvue d'une collerette (25a) apte à pénétrer à l'intérieur dudit manchon (17) et à maintenir lesdites billes (16) prisonnières de ladite gorge interne (24) dudit corps creux (10).

6. Coupe-circuit selon l'une des revendications précédentes, **caractérisé en ce qu'**il comprend une pièce (7) de raccordement fluidique logée à l'intérieur dudit élément femelle (B) et comprenant au moins un canal (8) de circulation dudit fluide et une extension axiale (9) apte à pénétrer dans ledit corps creux (10), de façon à déterminer la position dudit corps creux dans le corps (4, 5) de l'élément femelle.

7. Coupe-circuit selon les revendications 5 et 6, **caractérisé en ce que** ladite douille (25) est en appui élastique (26) contre ladite extension axiale (9) de ladite pièce de raccordement (7), à l'intérieur dudit corps creux (10).

8. Coupe-circuit selon l'une des revendications précédentes, **caractérisé en ce que** ledit orifice radial (19) de passage de fluide est ménagé dans un anneau (18) servant de butée de positionnement dudit corps creux (10).

9. Coupe-circuit selon l'une des revendications précédentes, **caractérisé en ce que** le verrouillage de l'élément mâle dans l'élément femelle est opéré à l'aide d'une rangée de billes (12) qui sont montées dans un alésage (6) d'un corps (4, 5) de l'élément femelle et qui sont prévues pour s'engager radialement dans une gorge annulaire (1b) pratiquée dans la paroi extérieure d'un embout (1) de l'élément mâle, lesdites billes étant portées par un tiroir (13) chargé élastiquement, et **en ce que** les moyens (14) de charge élastique dudit tiroir sont prévus pour pousser ledit tiroir vers une position dans laquelle lesdites billes font saillie à l'intérieur dudit tiroir, ledit tiroir étant alors en appui contre une butée (4b) limitant son mouvement vers l'intérieur dudit élément femelle (B), de telle sorte que l'introduction dudit embout (1) mâle dans ledit élément femelle est empêchée dans cette position.

10. Coupe-circuit selon la revendication 9, **caractérisé en ce que** ledit élément femelle comprend un corps bipartite (4, 5) formé d'un corps principal (4) contenant ledit manchon (17) et d'un corps auxiliaire (5) à l'intérieur duquel est mobile ledit tiroir (13), lesdits corps principal et auxiliaire étant assemblés de façon amovible.

11. Coupe-circuit selon la revendication 10, **caractérisé en ce que** ladite position vers laquelle lesdits moyens (14) de charge élastique poussent ledit tiroir (13) correspond à l'appui dudit tiroir contre ledit corps principal (4).

12. Coupe-circuit selon l'une des revendications 9 à 11, **caractérisé en ce que** ledit corps (5) de l'élément femelle comprend une gorge annulaire interne (28) de réception desdites billes (12) lors d'un déplacement dudit tiroir (13) à l'encontre desdits moyens (14) de charge élastique.

13. Coupe-circuit selon l'une des revendications 9 à 12, **caractérisé en ce que** ledit embout (1) comprend un canal central (21) équipé d'une patte (2) de support d'un flotteur (3) formant clapet anti-retour.

14. Coupe-circuit selon l'une des revendications 9 à 13, **caractérisé en ce qu'**il comprend un outil (30) de déplacement dudit tiroir (13), à l'encontre desdits moyens (14) de rappel élastique, vers une position dans laquelle lesdites billes (12) sont escamotées, de telle sorte qu'elles ne font pas saillie vers l'intérieur dudit tiroir.

15. Coupe-circuit selon les revendications 10 et 14, **caractérisé en ce que** ledit outil (30) est prévu pour être assemblé avec ledit corps auxiliaire (5) à la place dudit corps principal (4), ledit outil étant pourvu d'une butée (32) de déplacement dudit tiroir (13).

16. Coupe-circuit selon la revendication 14, **caractérisé en ce que** ledit outil (30) comprend un volume creux (33) de réception dudit embout mâle (1).

## Patentansprüche

1. Sicherheitsabschaltvorrichtung für Förderanlagen von Druckfluiden mit einem einen Ansatz (1) umfassenden Einsteckelement (A) und einem aufnehmenden Element (B), die an den Enden von zwei Leitungsteilen (A₁, B₁) befestigt sind und die geeignet sind, axial ineinander zu greifen, wobei sie sich verriegeln und die Öffnung eines inneren Ventils hervorrufen, **dadurch gekennzeichnet, dass** sie eine Hülse (17) umfasst, die in dem aufnehmenden Element angeordnet ist und zwischen einer von mindestens einer radialen Durchgangsöffnung (19) des Fluids entfernten Position, eine Position die durch die Wirkung des Ansatzes (1) auf die Hülse (17) gesteuert wird, und einer die Öffnung verschließenden Position beweglich ist, und dass sie Kugeln (16) umfasst, die im Inneren eines Hohlkörpers (10) des aufnehmenden Elementes angeordnet sind, wobei die Kugeln in Aufnahmen (17a) der Hülse aufgenommen sind und dazu dienen, in eine äußere Ringnut (1c) des Ansatzes (1) einzugreifen, um die Hülse (1) in lösbarer Weise in Bezug auf einen Ansatz (1) des Einsteckelementes festzulegen, derart, dass ein Rücksprung des Ansatzes (1) in Richtung des Ausflusses (6a) des aufnehmenden Elementes (B) eine Verschiebung der Hülse (17) in derselben Richtung in Gegenüberstellung zu der radialen Durchgangsöffnung (19) des Fluids nach sich zieht.

2. Abschaltvorrichtung nach Anspruch 1, **dadurch gekennzeichnet, dass** die radiale Öffnung (19) vorgesehen ist, um einen in dem Körper (4) des aufnehmenden Elementes (B) um den Hohlkörper (10) herum ausgearbeiteten Ringraum (22) mit einem Innenkanal (21) des Ansatzes (1) in Verbindung zu setzen.

3. Abschaltvorrichtung nach Anspruch 1, **dadurch gekennzeichnet, dass**, wenn die Hülse (17) durch den Ansatz (1) während seines Zurückziehens verschoben wird, die Hülse in eine solche Position kommt, dass das unter Druck stehende Fluid auf die Hülse eine im Wesentlichen radiale und zentripetale Kraft ausübt.

4. Abschaltvorrichtung nach einem der vorhergehenden Ansprüche, **dadurch gekennzeichnet, dass** der Hohlkörper (10) eine innere Aufnahme (24) für die Kugeln (16) umfasst, wobei die Nut das Verschwinden der Kugeln aus der äußeren Ringnut (1c) des Ansatzes (1) heraus gestattet.

5. Abschaltvorrichtung nach Anspruch 4, **dadurch gekennzeichnet, dass** sie eine in die Rückziehrichtung des Einsteckansatzes elastisch vorgespannte (26) Buchse (25) umaßt, wobei die Buchse mit einem Kragen (25a) versehen ist, der geeignet ist, in das Innere der Hülse (17) einzudringen und die Kugeln (16) in der inneren Nut (24) des Hohlkörpers (10) gefangen zu halten.

6. Abschaltvorrichtung nach einem der vorhergehenden Ansprüche, **dadurch gekennzeichnet, dass** sie ein Stück (7) für einen Fluidanschluss, das im Inneren des aufnehmenden Elementes (B) angeordnet ist und mindestens einen Zirkulationskanal des Fluids und eine axiale Verlängerung (9) umfasst, die geeignet ist, derart in den Hohlkörper (10) einzugreifen, dass die Position des Hohlkörpers in dem Körper (4, 5) des aufnehmenden Elementes bestimmt wird.

7. Abschaltvorrichtung nach Anspruch 5 und Anspruch 6, **dadurch gekennzeichnet, dass** die Buchse (25) in elastischer Abstützung (26) gegen die axiale Verlängerung (9) des Anschlussstückes (7) im Inneren des Hohlkörpers (10) ist.

8. Abschaltvorrichtung nach einem der vorhergehenden Ansprüche, **dadurch gekennzeichnet, dass** die radiale Öffnung (19) für den Durchgang des Fluids in einen Ring (18) eingearbeitet ist, der als Positionieranschlag für den Hohlkörper (10) dient.

9. Abschaltvorrichtung nach einem der vorhergehenden Ansprüche, **dadurch gekennzeichnet, dass** die Verriegelung des Einsteckelementes in dem aufnehmenden Element mit Hilfe einer Reihe von Kugeln (12) realisiert ist, die in einer Bohrung (6) eines Körpers (4, 5) des aufnehmenden Elementes montiert sind und die vorgesehen sind, um radial in eine Ringnut (1b) einzugreifen, die in der äußeren Wand eines Ansatzes (1) des Einsteckelementes eingearbeitet ist, wobei die Kugeln von einem elastisch vorgespannten Schieber (13) getragen werden und dass die Mittel (14) zur elastischen Vorspannung des Schiebers vorgesehen sind, um den Schieber in eine Position zu drücken, in der die Kugeln in das Innere des Schiebers hervorragen, wobei der Schieber sich dem gegen einen Anschlag (4b) abstützt, der seine Bewegung in das Innere des aufnehmenden Elementes (B) begrenzt, derart, dass in dieser Position das Einführen des Einsteckansatzes (1) in das aufnehmende Element verhindert wird.

10. Abschaltvorrichtung nach Anspruch 9, **dadurch gekennzeichnet, dass** das aufnehmende Element einen zweiteiligen Körper (4, 5) umfasst, der durch einen die Hülse (17) enthaltenden Hauptkörper (4) und einen Hilfskörper (5) gebildet wird, in dessen Innerem der Schieber (13) beweglich ist, wobei der Hauptkörper und der Hilfskörper in lösbarer Weise zusammengesetzt sind.

11. Abschaltvorrichtung nach Anspruch 10, **dadurch gekennzeichnet, dass** die Position, in die die Mittel (14) zur elastischen Vorspannung den Schieber (13) drücken, dem Abstützen des Schiebers gegen den Hauptkörper (4) entspricht.

12. Abschaltvorrichtung nach einem der Ansprüche 9 11, **dadurch gekennzeichnet, dass** der Körper (5) des aufnehmenden Elementes eine innere Ringnut (28) für die Aufnahme der Kugeln (12) während einer Verschiebung des Schiebers (13) gegen die Mittel (14) zur elastischen Vorspannung umfasst.

13. Abschaltvorrichtung nach einem der Ansprüche 9 bis 12, **dadurch gekennzeichnet, dass** der Ansatz (1) einen mittleren Kanal (21) umfasst, der mit einem Fuß (2) zum Lagern eines ein Rückschlagventil bildenden Schwimmers (3) ausgerüstet ist.

14. Abschaltvorrichtung nach einem der Ansprüche 9 bis 13, **dadurch gekennzeichnet, dass** sie ein Werkzeug (30) zur Verschiebung des Schiebers (13) gegen die Mittel (14) zur elastischen Vorspannung in eine Position, in der die Kugeln (12) versteckt sind, umfasst, derart, dass sie nicht in das Innere des Schiebers hervorspringen.

15. Abschaltvorrichtung nach den Ansprüchen 10 und 14, **dadurch gekennzeichnet, dass** das Werkzeug (30) vorgesehen ist, um mit dem Hilfskörper (5) anstelle des Hauptkörpers (4) zusammengesetzt zu werden, wobei das Werkzeug mit einem Anschlag (32) .zur Verschiebung des Schiebers versehen ist.

16. Abschaltvorrichtung nach Anspruch 14, **dadurch gekennzeichnet, dass** das Werkzeug (30) einen hohlen Raum (33) zur Aufnahme des Einsteckansatzes (1) aufweist.

## Claims

1. A safety disconnection device for a pressurised-fluid handling installation, comprising a male element (A) comprising an end piece (1) and a female element (B) which are fastened to the ends of two portions of piping (A₁, B₁) and which are capable of fitting axially one inside the other, locking and causing an internal valve to open, **characterised in that** it comprises a sleeve (17) arranged in said female element and movable between a position distant from at least one radial passage orifice (19) for said fluid, which position is controlled by the action of the end piece (1) on the sleeve (17), and a position blocking said orifice, and **in that** it comprises ball bearings (16) arranged within a hollow body (10) of said female element, said ball bearings being held in housings (17a) in said sleeve and intended to be engaged in an external annular groove (1c) of said end piece (1) in order removably to lock said sleeve relative to an end piece (1) of the male element, such that withdrawing said end piece (1) in the direction of the outlet (6a) of said female element (B) involves displacement of said sleeve (17) in the same direction, opposite said radial passage orifice (19) for said fluid.

2. A disconnection device according to Claim 1, **characterised in that** said radial orifice (19) is provided to link an annular space (22), formed in the body (4) of said female element (B) around said hollow body (10), and an internal duct (21) of said end piece (1).

3. A disconnection device according to Claim 1, **characterised in that**, when said sleeve (17) is displaced by said end piece (1) when it is withdrawn, said sleeve comes into a position such that the pressurised fluid exerts an essentially radial and centripetal force on said sleeve.

4. A disconnection device according to one of the preceding claims, **characterised in that** said hollow body (10) comprises an internal groove (24) for receiving said ball bearings (16), said groove permitting said ball bearings to be retracted out of said external annular groove (1c) of said end piece (1).

5. A disconnection device according to Claim 4, **characterised in that** it comprises a bushing (25) elastically loaded (26) in the direction of withdrawal of said male end piece, said bushing being provided with a collar (25a) capable of penetrating into said sleeve (17) and of trapping said ball bearings (16) of said inner groove (24) of said hollow body (10).

6. A disconnection device according to one of the preceding claims, **characterised in that** it comprises a fluid connection part (7) housed within said female element (B) and comprising at least one duct (8) for said fluid to circulate in and an axial extension (9) capable of penetrating into said hollow body (10), so as to determine the position of said hollow body in the body (4, 5) of the female element.

7. A disconnection device according to Claims 5 and 6, **characterised in that** said bushing (25) bears elastically (26) against said axial extension (9) of said connection part (7), within said hollow body (10).

8. A disconnection device according to one of the preceding claims, **characterised in that** said radial fluid passage orifice (19) is formed in a ring (18) acting as a positioning stop of said hollow body (10).

9. A disconnection device according to one of the preceding claims, **characterised in that** the locking of the male element in the female element is effected by means of a row of ball bearings (12) which are mounted in a bore (6) in a body (4, 5) of the female element and which are provided to engage radially in an annular groove (1b) formed in the outer wall of an end piece (1) of the male element, said ball bearings being borne by an elastically loaded slide (13), and **in that** the means (14) for elastically loading said slide are provided to push said slide towards a position in which said ball bearings project to the inside of said slide, said slide then being in a bearing configuration against a stop (4b) which restricts its movement towards the inside of said female element (B), such that the introduction of said male end piece (1) into said female element is prevented in this position.

10. A disconnection device according to Claim 9, **characterised in that** said female element comprises a two-part body (4, 5) formed of a main body (4) containing said sleeve (17) and an auxiliary body (5) within which said slide (13) is mobile, said main and auxiliary bodies being removably assembled.

11. A disconnection device according to Claim 10, **characterised in that** said position towards which said elastic loading means (14) push said slide (13) corresponds to the bearing of said slide against said main body (4).

12. A disconnection device according to one of Claims 9 to 11, **characterised in that** said body (5) of the female element comprises an inner annular groove (28) for receiving said ball bearings (12) upon displacement of said slide (13) counter to said elastic loading means (14).

13. A disconnection device according to one of Claims 9 to 12, **characterised in that** said end piece (1) comprises a central duct (21) fitted with a lug (2) for supporting a float (3) forming a non-return valve.

14. A disconnection device according to one of Claims 9 to 13, **characterised in that** it comprises a tool (30) for displacing said slide (13), counter to said elastic return means (14), towards a position in which said ball bearings (12) are retracted, such that they do not protrude towards the inside of said slide.

15. A disconnection device according to Claims 10 and 14, **characterised in that** said tool (30) is provided to be assembled with said auxiliary body (5) instead of said main body (4), said tool being provided with a stop (32) for the displacement of said slide (3).

16. A disconnection device according to Claim 14, **characterised in that** said tool (30) comprises a hollow volume (33) for receiving said male end piece (1).
